(19) Europäisches Patentamt
European Patent Office
Office européen des brevets

(11) Veröffentlichungsnummer: **0 057 245**
**B1**

(12) # EUROPÄISCHE PATENTSCHRIFT

(45) Veröffentlichungstag der Patentschrift: **30.05.84**

(51) Int. Cl.³: **C 09 B 44/02**, D 06 P 1/41, D 21 H 3/80

(21) Anmeldenummer: **81106548.1**

(22) Anmeldetag: **24.08.81**

(54) **Kationische Triazinfarbstoffe, ihre Herstellung und Verwendung.**

(30) Priorität: **24.12.80 DE 3048998**

(43) Veröffentlichungstag der Anmeldung: **11.08.82 Patentblatt 82/32**

(45) Bekanntmachung des Hinweises auf die Patenterteilung: **30.05.84 Patentblatt 84/22**

(84) Benannte Vertragsstaaten: **CH DE FR GB IT LI**

(56) Entgegenhaltungen: **FR - A - 2 424 305**

(73) Patentinhaber: **BAYER AG, Konzernverwaltung RP Patentabteilung, D-5090 Leverkusen 1 Bayerwerk (DE)**

(72) Erfinder: **Kunde, Klaus, Dr., Uppersberg 45, D-5090 Leverkusen 1 (DE)**

EP 0 057 245 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Farbstoffe der allgemeinen Formel

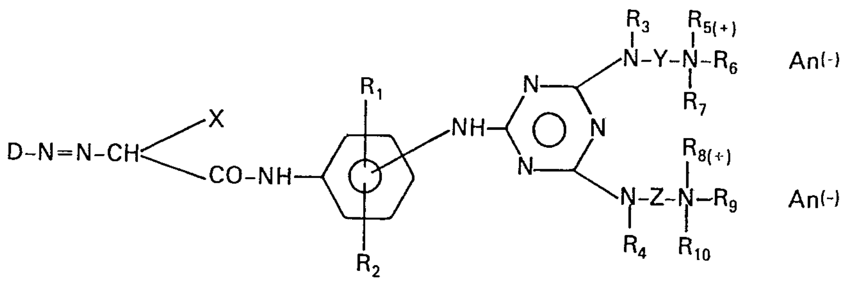

(I)

worin

D der Rest einer von anionischen Gruppen freien Diazokomponente,

Y ein Rest der Formel $COCH_3$, CN, $COOCH_3$, $COOC_2H_5$, $CONH_2$, $COC_6H_5$, $CON(R_3)$-Y-N $(R_5R_6R_7)^{(+)}An^{(-)}$,

Y und Z unabhängig voneinander ein Brückenglied oder eine direkte Bindung,

$R_1$ und $R_2$ unabhängig voneinander Wasserstoff oder ein nichtionischer Substituent,

$R_3$ und $R_4$ unabhängig voneinander Wasserstoff, $C_1$-$C_4$-Alkyl oder β- oder γ-$C_2$-$C_4$-Hydroxyalkyl, und

$R_5$-$R_{10}$ unabhängig voneinander Wasserstoff, $C_1$-$C_4$-Alkyl, β- oder γ-$C_2$-$C_4$-hydroxyalkyl, β- oder γ-$C_2H_4$-Ammoniumalkyl, Phenyl oder Benzyl sind, oder

$R_5$ und $R_6$ und/oder

$R_8$ und $R_9$ mit dem Stickstoff einen fünf- oder sechsgliedrigen Heterocyclus oder

Y, $R_3$ und $R_5$ und/oder

Z, $R_4$ und $R_8$ zusammen mit den jeweiligen Stickstoffatomen einen Piperazinring oder

$R_5$, $R_6$, $R_7$ und/oder

$R_8$, $R_9$, $R_{10}$ mit dem Stickstoff einen gegebenenfalls substituierten Pyridin-Rest darstellen, und

$An^{(-)}$ ein Anion ist,

sowie Verfahren zu ihrer Herstellung, dadurch gekennzeichnet, dass man ein Mol eines Cyanurhalogenids in beliebiger Reihenfolge mit je einem Mol der Verbindung

$$[HN(R_3)\text{-}Y\text{-}NR_5R_6R_7]^{\oplus}An^{\ominus} \qquad (II)$$

$$[HN(R_4)\text{-}Z\text{-}NR_8R_9R_{10}]^{\oplus}An^{\ominus} \qquad (III)$$

und

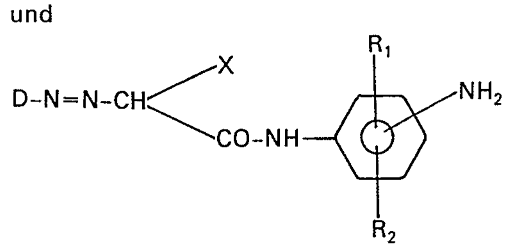

(IV)

wobei

D, X, Y, Z, $R_1$-$R_{10}$ und $An^{\ominus}$ die oben angegebene Bedeutung besitzen, umsetzt,

oder dass man ein Mol eines Amins der Formel

$$D\text{-}NH_2 \qquad (V)$$

diazotiert und mit einem Mol einer Kupplungskomponente der allgemeinen Formel

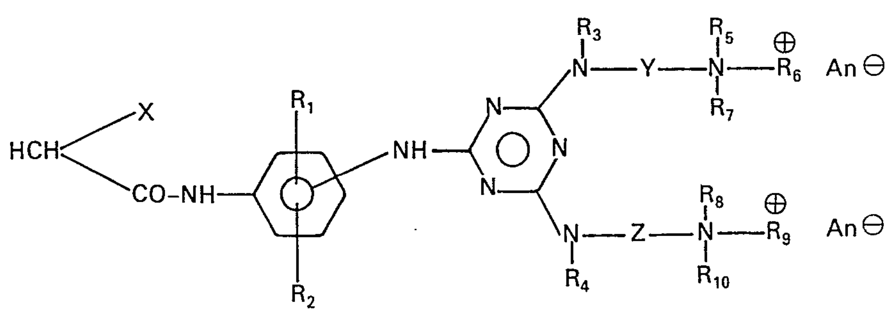

(VI)

wobei

D, X, Y, Z, $R_1$-$R_{10}$ und $An^{\ominus}$ die oben angegebene Bedeutung besitzen,

kuppelt.

Ausserdem ist die Verwendung der Farbstoffe I zum Färben von synthetischen und natürlichen kationisch anfärbbaren Materialien, insbesondere Papier, Gegenstand der Erfindung.

D steht insbesondere für eine Diazokomponente der Benzol-, Naphthalin-, Thiazol-, Benzthiazol-, Benzisothiazol- oder Thiadiazolreihe.

Die Brückenglieder Y und Z stehen z.B. für $C_2$-$C_5$-Alkylen, $C_5$-$C_7$-Oxaalkylen, Phenylen oder Benzylen.

Als nichtionische Substituenten $R_1$ und $R_2$ sind beispielsweise Halogen, insbesondere Chlor oder

Brom, $C_1$-$C_4$-Alkyl oder $C_1$-$C_4$-Alkoxy verwendbar.

$R_5$ und $R_6$ bzw. $R_8$ und $R_9$ können zusammen mit dem Stickstoff z.B. einen gegebenenfalls durch Methyl substituierten Pyrrolidin-, Morpholin- oder Piperidin-Ring bilden.

Von den Farbstoffen der Formel I sind die Farbstoffe der Formel

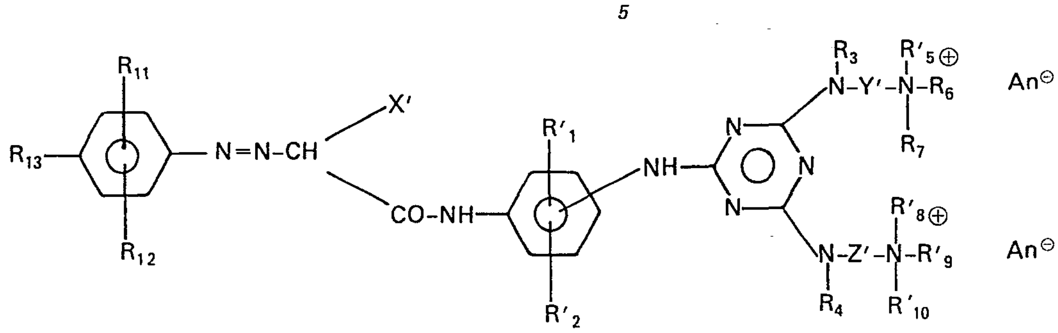

(VII)

bevorzugt, worin

$R_{11}$ und $R_{12}$ unabhängig voneinander H, Cl, Br, $OCH_3$, $OC_2H_5$, $CH_3$ oder $C_2H_5$,

$R_{13}$ H, Cl, Br, $OCH_3$, $OC_2H_5$, $CH_3$, $C_2H_5$, $NHCOC_6H_5$, $CONHC_6H_5$,

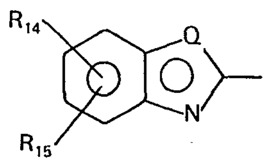

mit Q = O, S oder NH,

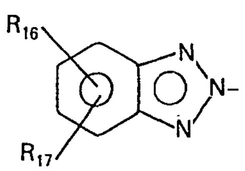

oder

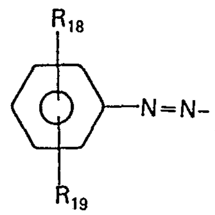

$R_{14}$-$R_{19}$ unabhängig voneinander H, Cl, Br, $OCH_3$, $OC_2H_5$, $CH_3$ oder $C_2H_5$,

X' ein Rest der Formel $COCH_3$, CN, $COOCH_3$, $COOC_2H_5$, $CONH_2$, $COC_6H_5$ oder CON $(R'_3)$ $-Y_1-N(R'_5,R'_6,R'_7)^{\oplus}An^{\ominus}$

Y' und Z' unabhängig voneinander $C_2$-$C_5$-Alkylen, $C_5$-$C_7$-Oxaalkylen, Phenylen, Benzylen oder eine direkte Bindung,

$R'_1$ und $R'_2$ unabhängig voneinander Wasserstoff, Chlor, Brom, Methoxy, Ethoxy, Methyl oder Ethyl und

$R'_5$ bis $R'_{10}$ unabhängig voneinander Wasserstoff, $C_1$-$C_4$-Alkyl, β- oder γ-$C_2$-$C_4$-Hydroxyalkyl, β- oder γ-$C_2$-$C_4$-Ammoniumalkyl oder Benzyl sind, oder

$R'_5$ und $R'_6$ und/oder

$R'_8$ und $r'_9$ mit dem Stickstoff einen Pyrrolidin-, Morpholin- oder Piperidin-Rest oder

Y, $R_3$ und $R_5$ und/oder

Z, $R_4$ und $R_8$ zusammen mit dem jeweiligen Stickstoffatomen einen Piperazinring oder

$R'_5$, $R'_6$, $R'_7$ und/oder

$R'_8$, $R'_9$, $R'_{10}$ mit dem Stickstoff einen Pyridin- oder Picolin-Rest darstellen, und

$R_3$, $R_4$ und $An^{\ominus}$ die in Formel (I) angegebene Bedeutung haben.

Bevorzugt werden Farbstoffe der allgemeinen Formel (VII), worin

$R_{12}$ für Wasserstoff steht, und
$R_{11}$ in der o-Stellung zur Azobrücke steht.

Besonders bevorzugt werden Farbstoffe der allgemeinen Formel (VII) worin die Diazokomponente ein Rest der allgemeinen Formel

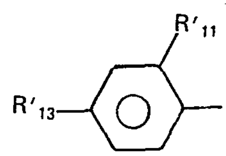

ist, wobei

$R'_{11}$ H, Cl, $OCH_3$ oder $CH_3$ und
$R_{13}$ H, $OCH_3$, $CH_3$,

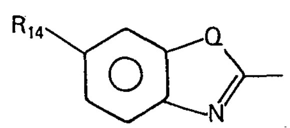

mit Q = O, S oder NH und $R_{14}$ = H oder $CH_3$,

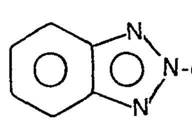

oder

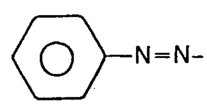

sind.

Ausserdem sind Farbstoffe der Formel (VII) hervorzuheben, worin

$R'_1$ für Wasserstoff steht und
$R'_2$ in o-Stellung zur Aminocarbonylgruppe steht und die obengenannte Bedeutung hat.

Von besonderem Wert sind Farbstoffe der allgemeinen Formel

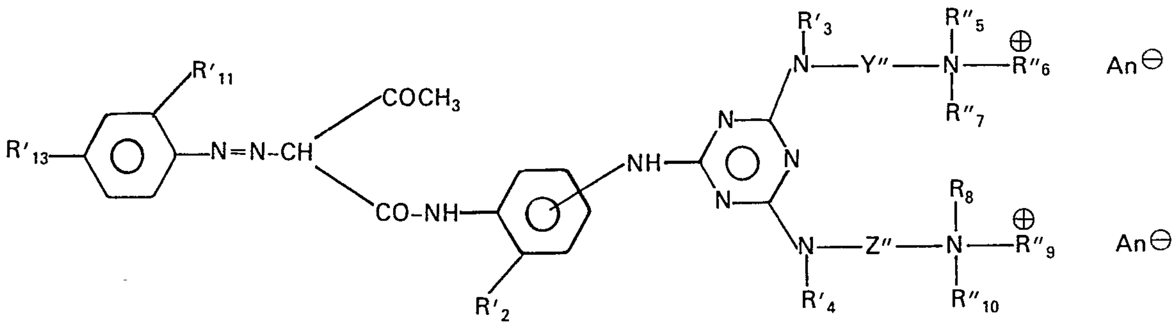

(VIII)

worin

Y″ und Z″ unabhängig voneinander für $C_2$–$C_4$-Alkylen und

R′$_3$, R′$_4$, R″$_5$–R″$_{10}$ unabhängig voneinander für Wasserstoff, $C_1$–$C_4$-Alkyl oder β-Hydroxy-$C_2$–$C_4$-Alkyl stehen, und

R′$_2$, R′$_{11}$, R′$_{13}$ und An$^{\ominus}$ die vorstehend genannte Bedeutung haben.

Als Diazokomponenten (V) kann man z.B. folgende Aminobenzole verwenden: Anilin, o-Anisidin, o-Toluidin, o-Phenetidin, p-Anisidin, p-Phenetidin, p-Toluidin, m-Anisidin, m-Toluidin, 2-Methoxy-4-methylanilin, 2-Methyl-4-methoxyanilin, o-Chloranilin, m-Chloranilin, p-Chloranilin, 2-(4′-Aminophenyl)-benzthiazol, 2-(4′-Aminophenyl)-6-methylbenzthiazol, 2-(4′-Amino-3′-methylphenyl)-4,6-dimethylbenzthiazol, 2-(4′-Aminophenyl)-benzimidazol, 2-(4′-Aminophenyl)-4-methyl-benzimidazol, 2-(4′-Aminophenyl)-5-methyl-benzimidazol, 2-(4′-Aminophenyl)-benzoxazol, 2-(4′-Aminophenyl)-benzthiazol, 2-(4′-Amino-3′-me-thyl-phenyl)-benzthiazol, 2-(4′-Amino-3′-methoxyphenyl)-benztriazol, 2-(4′-Aminophenyl)-5- methylbenzthiazol, 4-Aminoazobenzol und 4-Amino-2,3′-dimethylazobenzol.

Die β-Carbonylcarbonsäurearylide der Formel

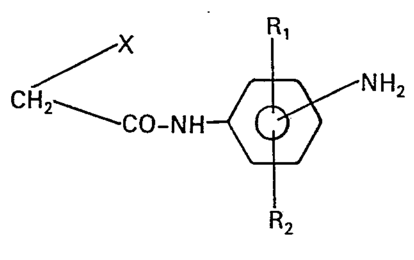

erhält man z.B., indem man die entsprechenden Aniline in an sich bekannter Weise mit einem der folgenden Reagenzien umsetzt:

Diketen, Acetessigsäuremethylester, Acetessigsäureethylester, Cyanessigsäureethylester, Cyanessigsäuremethylester, Malonsäuredimethylester, Malonsäuredimethylester, Malonsäuremonomethylesteramid, Malonsäuremonomethylesteriminoester, Benzylessigsäuremethylester.

Die verwendeten Aniline erhält man z.B., indem man Nitroaniline nach der in der Deutschen Offenlegungsschrift 29 15 323 beschriebenen Methode umsetzt; als Reduktionsmethode kommt auch die katalytische Reduktion, z.B. mit Raney-Nickel in Frage. Als Nitroaniline kommen z.B. in Betracht:

p-Nitranilin, m-Nitranilin, 4-Nitro-3-methylanilin, 3-Nitro-4-methylanilin, 4-Nitro-3-methoxyanilin, 3-Nitro-4-methoxyanilin, 3-Nitro-4-ethoxyanilin, 4-Nitro-3-chloranilin, 4-Chlor-3-nitroanilin.

Als Amine, die durch Quarternierung in die Ammoniumverbindungen II oder III überführt werden können, können z.B. folgende verwendet werden:

2-Dimethylaminoethylamin, 3-Dimethylaminopropylamin, 2-(2′-Dimethylaminoethoxy)-ethylamin, 3-Morpholinopropylamin, 2-Diethylaminoethylamin, 3-Diethylaminopropylamin, 2-(Bis-β-hydroxyethylamino)-ethylamin, 2-(Bis-β-hydroxyethylamino)-propylamin, 4-Dimethylaminoanilin, 3-Dimethylaminoanilin, 4-Amino-dimethylbenzylamin, 3-Aminodimethylbenzylamin, 4-Aminomethylbenzylamino, 1,2-Diaminoethan, 1,2-Diaminopropan, 1,3-Diaminopropan, 1,2-Diaminobutan, 1,4-Diaminobutan, 2-Methylaminoethylamin, Methyl-2-aminopropylamin, Diethylentriamin, Bis-(3-aminopropyl)-amin, Bis-(3-aminopropyl)-methylamin, β-Hydroxyethyl-piperazin, β-Aminoethyl-piperazin.

Zur Überführung dieser Amine in die entsprechenden quartären Ammoniumionen kann man entweder eine organische Säure oder eine Mineralsäure addieren oder mit einem Quaternierungsreagenz umsetzen, z.B. mit Methylchlorid, Methylbromid, Methyljodid, Benzolsulfonsäuremethylester, Ethylchlorid, Benzolsulfonsäureethylester, Dimethylsulfat, Diethylsulfat oder Ethylenoxid, Propylenoxid, Butylenoxid in Gegenwart von Säuren.

Die Umsetzung mit dem Quaternierungsreagenz kann auch an anderer, geeigneter Stelle des Syntheseweges erfolgen, z.B. als letzter Schritt, nach der Kupplung.

Anstelle der Nitroaniline kann man auch die entsprechenden halbseitig geschützten Phenylendiamine verwenden, z.B. die Formylaminoaniline, oder die Aminophenyloxamidsäuren, wobei man dann statt der Reduktion eine selektive Hydrolyse der Schutzgruppe vornehmen muss.

Ebensogut kann man auch in der üblichen Weise die geeigneten Nitroaniline oder Formylaminoaniline bzw. Aminophenyloxamidsäuren in die entsprechenden β-Carbonylcarbonsäurearylide überführen, diese mit einer der erfindungsgemässen Diazoniumverbindung kuppeln und die

Kupplungsprodukte selektriv reduzieren bzw. hydrolysieren; die entstandene Aminogruppe wird nun in üblicher Weise mit einem Cyanurhalogenid, dieses Produkt mit den erfindungsgemässen Diaminen angesetzt; schliesslich wird wie o.a. die bisquartäre Ammoniumverbindung hergestellt.

Die erfindungsgemässen Farbstoffe färben kationisch anfärbbare Materialien, wie z.B. Polyacrylnitril, sauermodifizierte Polyester- und Polyamidfasern, Wolle und Leder, aber auch cellulosehaltige Materialien, insbesondere Papier mit guten Echtheiten in gelben Tönen.

Eingesetzt werden können die Farbstoffe zum Papiermasse-Färben oder zur Papieroberflächenfärbung. Sie sind geeignet für geleimte und für ungeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 4 bis 8, insbesondere pH 5 bis 7. Die Färbetemperatur beträgt im allgemeinen 10° bis 50°, vorzugsweise etwa 20°.

Die bei der Papierfärbung und -herstellung üblichen Hilfsmittel und Füllstoffe können beim Einsatz der erfindungsgemässen Farbstoffe mitverwendet werden. Die Farbstoffe besitzen bei der Papierfärbung ein ausgezeichnetes Ziehvermögen.

Die mit den erfindungsgemässen Farbstoffen erhaltenen Papierfärbungen zeichnen sich durch sehr gute Wasserechtheit (Ausblutechtheit) sowie Säure-, Alkali- und Alaun-Echtheit aus. Hervorzuheben ist aber die überraschend hohe Lichtechtheit der Papierfärbungen. Auch auf die Brillanz und Klarheit der Farbtöne ist hinzuweisen. Ferner ist das Kombinationsverhalten mit geeigneten Farbstoffen sehr gut.

Die Farbstoffe können auch zum Färben von Baumwolle und von Celluloseregenerat-Fasern eingesetzt werden, ohne dass die bisher üblichen Hilfsmittel wie z.B. die Tannin-Vorbehandlung angewendet werden müssen; auch auf die Zugabe von Salz kann verzichtet werden.

Das Färben erfolgt dann vorzugsweise bei Werten von 4–8, insbesondere bei pH 5 bis 7. Die Färbetemperatur beträgt im allgemeinen 60° bis 130°C, vorzugsweise 80° bis 100°.

Aus der vorstehend erwähnten DE-A-2 915 323 sind Azofarbstoffe bekannt, die ebenso wie die Farbstoffe der vorliegenden Erfindung eine Di-(ammonium-alkylen-amino)-triazinyl-Gruppe enthalten können und zum Färben von Papier geeignet sind. Im Gegensatz zu den neuen Farbstoffen enthalten sie jedoch eine oder mehrere Sulfonsäuregruppen. Die Summe ihrer basischen Gruppen im Farbstoffmolekül ist grösser als die der sauren Gruppen. In der Beschreibung werden als Kupplungskomponenten ausschliesslich Naphthalin-Derivate, bevorzugt 6-Amino-1-naphthol-3-sulfonsäure und ihre Derivate genannt.

Beispiel A

92 g Cyanurchlorid werden in 750 ml Aceton gelöst und auf 0° abgekühlt. Nach Zugabe von 69 g p-Nitroanilin tropft man innerhalb einer Stunde 130 ml einer 4n-Sodalösung zu und lässt noch eine Stunde nachrühren. Der bei Zugabe von 600 ml Eiswasser entstehende Niederschlag wird abgesaugt und in kleinen Portionen in 250 g 3-Dimethylaminopropylamin eingetragen, wobei sich der Ansatz auf ca. 60° erwärmt. Man rührt noch eine Stunde bei ca. 100°. Nach Zugabe von 500 ml Wasser wird bei 50° katalytisch über Raney-Nikkel hydriert. Nach Beendigung der Reduktion wird der Katalysator abfiltriert; das Filtrat wird durch Zugabe von Natronlauge auf pH 14 gebracht, wobei sich das Produkt der Formel

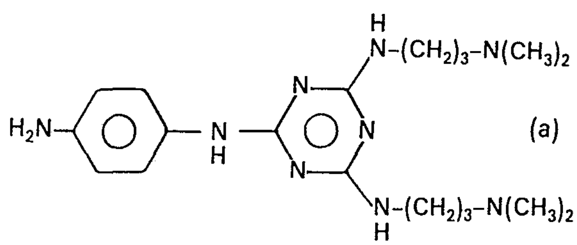

(a)

als Öl abscheidet.

Beispiel B

Verwendet man statt des in Beispiel A eingesetzten 3-Dimethylaminopropylamin eine äquimolare Menge 1,2-Diaminopropan, so erhält man das Zwischenprodukt der Formel

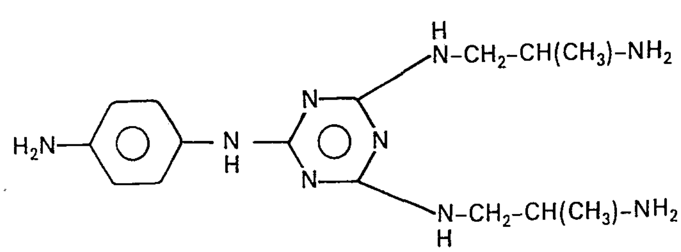

(b)

Beispiele C–L

Verwendet man statt des in Beispiel A eingesetzten 4-Nitroanilins eines der in der folgenden Tabelle aufgeführten Edukte, so erhält man die entsprechenden Produkte der Formel

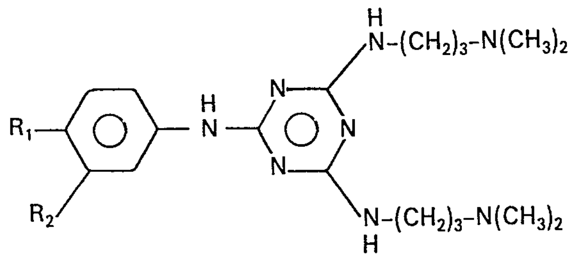

(c)

| Beispiel | Edukt | Produkt | |
|---|---|---|---|
| C | 3-Methoxy-4-nitroanilin | $R_1 = NH_2$ $R_2 =$ | $CH_3$ |
| D | 3-Ethoxy-4-nitroanilin | $NH_2$ | $OC_2H_5$ |
| E | 3-Methyl-4-nitroanilin | $NH_2$ | $CH_3$ |
| F | 3-Chlor-4-nitroanilin | $NH_2$ | Cl |
| G | 3-Nitroanilin | H | $NH_2$ |
| H | 3-Nitro-4-methoxyanilin | $OCH_3$ | $NH_2$ |
| J | 3-Nitro-4-ethoxyanilin | $CO_2H_5$ | $NH_2$ |
| K | 3-Nitro-4-methylanilin | $CH_3$ | $NH_2$ |
| L | 3-Nitro-4-chloranilin | Cl | $NH_2$ |

Beispiele M–U

Verwendet man statt des in Beispiel B eingesetzten 4-Nitroanilin eine äquimolare Menge einer der in der folgenden Tabelle aufgeführten Verbindungen, so erhält man die entsprechenden Verbindungen der Formel

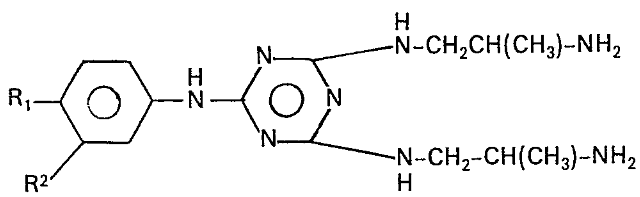

(d)

| Beispiel | Edukt | Produkt | |
|---|---|---|---|
| M | 3-Methoxy-4-nitroanilin | $R_1 = NH_2 =$ | $OCH_3$ |
| N | 3-Ethoxy-4-nitroanilin | $NH_2$ | $OC_2H_5$ |
| O | 3-Methyl-4-nitroanilin | $NH_2$ | $CH_3$ |
| P | 3-Chlor-4-nitroanilin | $NH_2$ | Cl |
| Q | 3-Nitroanilin | H | $NH_2$ |
| R | 3-Nitro-4-methoxyanilin | $OCH_3$ | $NH_2$ |
| S | 3-Nitro-4-ethoxyanilin | $OC_2H_5$ | $NH_2$ |
| T | 3-Nitro-4-methoxyanilin | $CH_3$ | $NH_2$ |
| U | 3-Nitro-4-chloranilin | Cl | $NH_2$ |

Beispiel 1

77 g des Zwischenproduktes aus Beispiel A werden in 300 ml Wasser gelöst, bei 20° mit 18 g Diketen versetzt und eine Stunde gerührt. 48 g Dehydro-o-thiotoluidin werden in 700 ml Wasser und 56 ml 30%iger Salzsäure mit 14 g Natriumnitrit bei 25° diazotiert. Die so erhaltene Suspension der Diazoniumverbindung wird auf 10° gekühlt und zu der auf 10° gekühlten Lösung der Diketenumsetzung gegeben, dann wird der pH-Wert dieser Suspension durch Zugabe von Natriumacetat auf ca. 4,5 gebracht. Die Kupplung ist nach zwei Stunden beendet. Durch Zugabe von Sodalösung wird der pH-Wert auf 9–10 gebracht, wobei das Kupplungsprodukt ausfällt. Es wird isoliert und in 200 ml Eisessig auf 100 ml Wasser aufgelöst. Man erhält eine stabile Lösung, die cellulosehaltige Materialien in grünstichig gelben Tönen färbt.

Beispiele 2–10

Verwendet man statt des in Beispiel 1 eingesetzten Zwischenproduktes aus Beispiel A für die Umsetzung mit Diketen die Zwischenprodukte der Beispiele C–L, so erhält man Lösungen der in der folgenden Tabelle angegebenen gelben Farbstoffe der Formel (e).

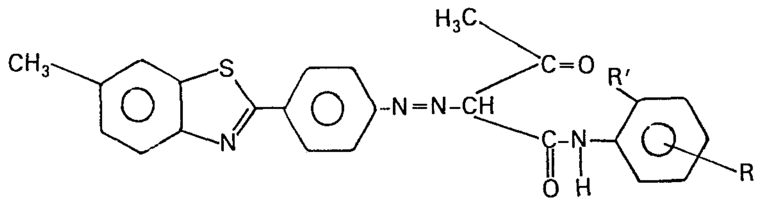

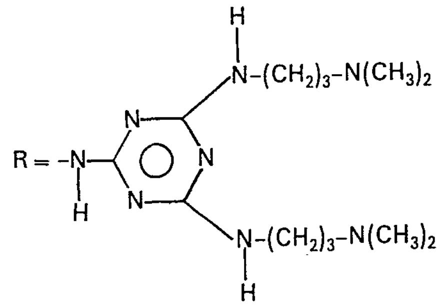

(e)

| Beispiel | Zwischen-produkt | Farbstoff | |
|---|---|---|---|
| | | R′ | R in Position |
| 2 | C | $OCH_3$ | 4 |
| 3 | D | $OC_2H_5$ | 4 |
| 4 | E | $CH_3$ | 4 |
| 5 | F | Cl | 4 |
| 6 | G | H | 5 |
| 7 | H | $OCH_3$ | 5 |
| 8 | I | $OC_2H_5$ | 5 |
| 9 | K | $CH_3$ | 5 |
| 10 | L | Cl | 5 |

Beispiele 11-60

Verwendet man statt des in Beispiel 1 eingesetzten Dehydro-p-thiotoluidins als Diazokomponente 2-(4′-Aminophenyl)-benztriazol (DK I), 2-(4′-Amino-3′-methoxyphenyl-)benztriazol (DK II), 2-(4′-Aminophenyl-)benzimidazol (DK III), 2-(4′-Aminophenyl-)benzthiazol (DK VI) und 4-Aminoazobenzol (DK VII), und für die Umsetzung mit Diketen die Zwischenprodukte A und C-L, so erhält man ebenfalls Lösungen der in der folgenden Tabelle angegebenen gelben Farbstoffe der Formel

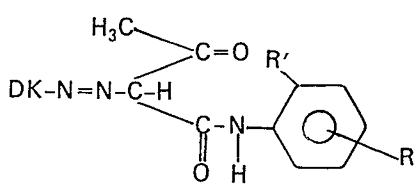

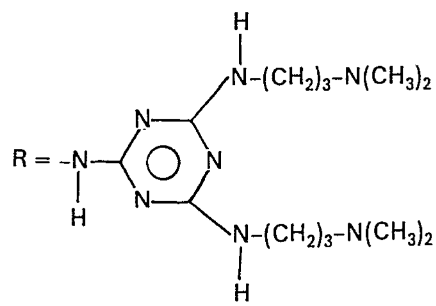

(f)

| Beispiel | Diazokomponente | R′ R in Position<br>Zwischen-produkt | Farbstoff | |
|---|---|---|---|---|
| | | | R′ | R in Position |
| 11 | I | A | H | 4 |
| 12 | I | C | $OCH_3$ | 4 |
| 13 | I | D | $OC_2H_5$ | 4 |
| 14 | I | E | $CH_3$ | 4 |
| 15 | I | F | Cl | 4 |
| 16 | I | G | H | 5 |
| 17 | I | H | $OCH_3$ | 5 |
| 18 | I | I | $OC_2H_5$ | 5 |
| 19 | I | K | $CH_3$ | 5 |
| 20 | I | L | Cl | 5 |
| 21 | II | A | H | 4 |
| 22 | II | C | $OCH_3$ | 4 |
| 23 | II | D | $OC_2H_5$ | 4 |
| 24 | II | E | $CH_3$ | 4 |

| Beispiel | Diazokomponente | Zwischenprodukt | Farbstoff | |
|---|---|---|---|---|
| 25 | II | F | Cl | 4 |
| 26 | II | G | H | 5 |
| 27 | II | H | $OCH_3$ | 5 |
| 28 | II | I | $OC_2H_5$ | 5 |
| 29 | II | K | $CH_3$ | 5 |
| 30 | II | L | Cl | 5 |
| 31 | III | A | H | 4 |
| 32 | III | C | $OCH_3$ | 4 |
| 33 | III | D | $OC_2H_5$ | 4 |
| 34 | III | E | $CH_3$ | 4 |
| 35 | III | F | Cl | 4 |
| 36 | III | G | H | 5 |
| 37 | III | H | $OCH_3$ | 5 |
| 38 | III | I | $OC_2H_5$ | 5 |
| 39 | III | K | $CH_3$ | 5 |
| 40 | III | L | Cl | 5 |
| 41 | VI | A | H | 4 |
| 42 | VI | C | $OCH_3$ | 4 |
| 43 | VI | D | $OC_2H_5$ | 4 |
| 44 | VI | E | $CH_3$ | 4 |
| 45 | VI | F | Cl | 4 |
| 46 | VI | G | H | 5 |
| 47 | VI | H | $OCH_3$ | 5 |
| 48 | VI | I | $OC_2H_5$ | 5 |
| 49 | VI | K | $CH_3$ | 5 |
| 50 | VI | L | Cl | 5 |
| 51 | VII | A | H | 4 |
| 52 | VII | C | $OCH_3$ | 4 |
| 53 | VII | D | $OC_2H_5$ | 4 |
| 54 | VII | E | $CH_3$ | 4 |
| 55 | VII | F | Cl | 4 |
| 56 | VII | G | H | 5 |
| 57 | VII | H | $OCH_3$ | 5 |
| 58 | VII | I | $OC_2H_5$ | 5 |
| 59 | VII | K | $CH_3$ | 5 |
| 60 | VII | L | Cl | 5 |

Beispiel 61

Die Paste des Kupplungsproduktes aus Beispiel 1 wird in 400 ml Wasser suspendiert; der pH-Wert dieser Suspension wird mit verdünnter Natronlauge auf ca. 10 gebracht. Dazu lässt man bei Raumtemperatur 37,8 g Dimethylsulfat langsam zutropfen, der pH-Wert wird durch Zugabe von verdünnter Natronlauge konstant gehalten. Wenn die Quaternierung beendet ist, wird der Ansatz zur Zerstörung des überschüssigen Dimethylsulfats auf 80°C erhitzt, dann wird der pH-Wert mit Essigsäure auf 3 gebracht. Man erhält eine stabile Lösung, die cellulosehaltige Materialien in grünstich-gelben Tönen anfärbt.

Beispiele 62–100

Verwendet man statt der in Beispiel 61 eingesetzten Paste des Kupplungsproduktes die Pasten der Kupplungsprodukte aus den Beispielen 2–40, so erhält man ebenfalls Lösungen gelber Farbstoffe.

Beispiel 101

Ein aus 60% Holzschliff und 40% ungebleichtem Sulfitzellstoff bestehender Trockenstoff wird im Holländer mit Wasser angeschlagen und bis zum Mahlgrad 40° SR gemahlen, so dass der Trockengehalt etwa über 2,5 liegt und anschliessend mit Wasser auf 2,5% Trockengehalt des Dickstoffs eingestellt.

200 Teile dieses Dickstoffs werden mit 5 Teilen einer 0,5%igen essigsauren wässrigen Lösung des Farbstoffs aus Beispiel 1 versetzt, ca. 5 Minuten verrührt, mit 2% Harzleim und 3% (bezogen auf Trockenstoff) versetzt und wieder einige Minuten bis zur Homogenität verrührt. Man verdünnt die Masse nur mit ca. 500 Teilen Wasser und stellt hieraus in üblicher Weise durch Absaugen über einen Blattbildner Papierblätter her. Die Papierblätter weisen eine grünstichig gelbe Färbung auf. Das Abwasser der Färbung ist praktisch farbstofffrei.

Beispiel 102 + 103

Auch beim Färben von ungebleichter Papiermasse unter sonst gleichen Färbebedingungen und bei der Verwendung von gebleichtem Sulfitzellstoff erhält man grünstichig-gelbe Papierfärbungen und praktisch farbstofffreie Abwässer.

**Patentansprüche**

1. Kationische Triazinfarbstoffe der allgemeinen Formel

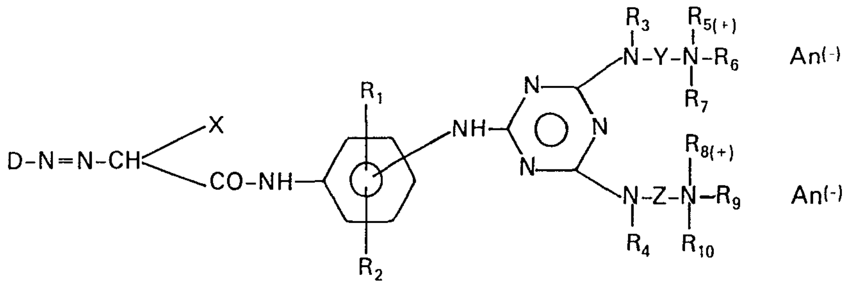

(I)

worin

D der Rest einer von anionischen Gruppen freien Diazokomponente,

X ein Rest der Formel $COCH_3$, CN, $COOCH_3$, $COOC_2H_5$, $CONH_2$, $COC_6H_5$, $CON(R_3)\text{-}Y\text{-}N(R_5R_6R_7)^{(+)}An^{\ominus}$,

Y und Z unabhängig voneinander ein Brückenglied oder eine direkte Bindung,

$R_1$ und $R_2$ unabhängig voneinander Wasserstoff oder ein nichtionischer Substituent,

$R_3$ und $R_4$ unabhängig voneinander Wasserstoff, $C_1$–$C_4$-Alkyl oder β- oder γ-$C_2$–$C_4$-Hydroxyalkyl, und

$R_5$ bis $R_{10}$ unabhängig voneinander Wasserstoff, $C_1$–$C_4$-Alkyl, β- oder γ-$C_2$–$C_4$-Hydroxyalkyl, β- oder γ-Ammoniumalkyl, Phenyl oder Benzyl sind, oder

$R_5$ und $R_6$ und/oder

$R_8$ und $R_9$ mit dem Stickstoff einen fünf- oder sechsgliedrigen Heterocyclus oder

Y, $R_3$ und $R_5$ und/oder

Z, $R_4$ und $R_8$ zusammen mit den jeweiligen Stickstoffatomen einen Piperazinring oder

$R_5$, $R_6$, $R_7$ und/oder

$R_8$, $R_9$, $R_{10}$ mit dem Stickstoff einen gegebenenfalls substituierten Pyridin-Rest darstellen, und

$An^{\ominus}$ ein Anion ist.

2. Kationische Triazinfarbstoffe der Formel des Anspruchs 1, worin

D für eine Diazokomponente der Benzol-, Naphthalin-, Thiazol-, Benzthiazol-, Benzisothiazol- oder Thiadiazolreihe,

Y und Z für $C_2$–$C_5$-Alkylen, $C_5$–$C_7$-Oxalkylen, Phenylen oder Benzylen und

$R_1$ und $R_2$ für Wasserstoff, Halogen, $C_1$–$C_4$-Alkyl oder $C_1$–$C_4$-Alkoxy stehen.

3. Kationische Triazinfarbstoffe der allgemeinen Formel

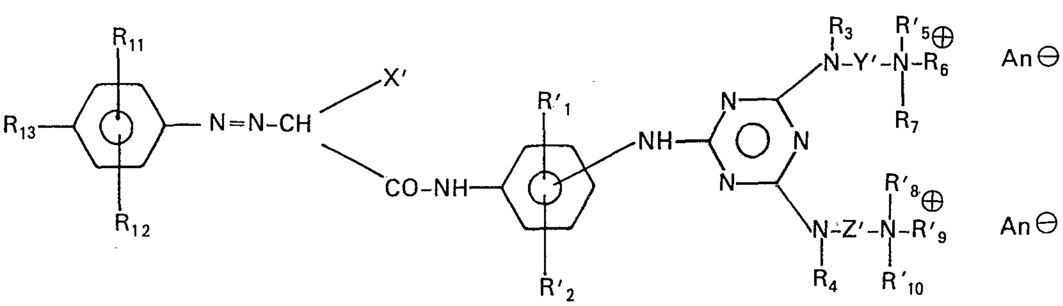

worin

$R_{11}$ und $R_{12}$ unabhängig voneinander H, Cl, Br, $OCH_3$, $OC_2H_5$, $CH_3$ oder $C_2H_5$,

$R_{13}$ H, Cl, Br, $OCH_3$, $OC_2H_5$, $CH_3$, $C_2H_5$, $NHCOC_6H_5$, $CONHC_6H_5$,

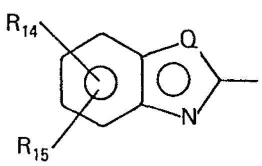

mit Q = O, S oder NH,

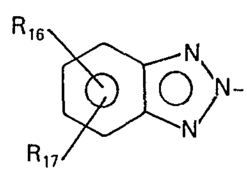

oder

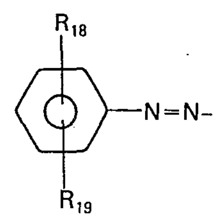

$R_{14}$ bis $R_{19}$ unabhängig voneinander H, Cl, Br, $OCH_3$, $OC_2H_5$, $CH_3$ oder $C_2H_5$,

X' ein Rest der Formel $COCH_3$, CN, $COOCH_3$, $COOC_2H_5$, $CONH_2$, $COC_6H_5$ oder CON $(R'_3)$ $-Y_1-N(R'_5,R'_6,R'_7)^{\oplus}An^{\ominus}$

Y' und Z' unabhängig voneinander $C_2$-$C_5$-Alkylen, $C_5$-$C_7$-Oxaalkylen, Phenylen, Benzylen oder eine direkte Bindung,

$R'_1$ und $R'_2$ unabhängig voneinander Wasserstoff, Chlor, Brom, Methoxy, Ethoxy, Methyl oder Ethyl und

$R'_5$ bis $R'_{10}$ unabhängig voneinander Wasserstoff, $C_1$-$C_4$-Alkyl, β- oder γ-$C_2$-$C_4$-Hydroxyalkyl, β- oder γ-$C_2$-$C_4$-Ammoniumalkyl oder Benzyl sind, oder

$R'_5$ und $R'_6$ und/oder

$R'_8$ und $R'_9$ mit dem Stickstoff einen Pyrrolidin-, Morpholin- oder Piperidin-Rest oder

Y, $R_3$ und $R_5$ und/oder

Z, $R_4$ und $R_8$ zusammen mit dem jeweiligen Stickstoffatome einen Piperazinring oder

$R'_5$, $R'_6$, $R'_7$ und/oder

$R'_8$, $R'_9$, $R'_{10}$ mit dem Stickstoff einen Pyridin- oder Picolin-Rest darstellen, und

$R_3$, $R_4$ und $An^{\ominus}$ die in Anspruch 1 angegebene Bedeutung haben.

4. Kationische Triazinfarbstoffe der allgemeinen Formel

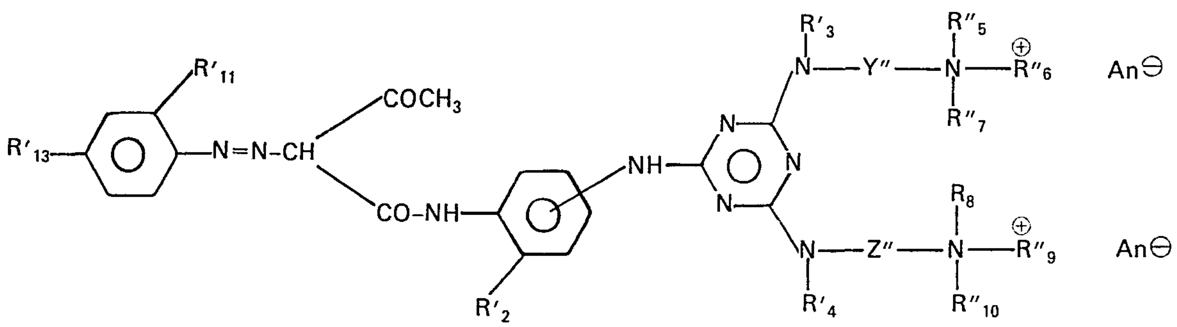

worin

Y'' und Z'' unabhängig voneinander für $C_2$-$C_4$-Alkylen,

$R'_2$ für Wasserstoff, Chlor, Brom, Methoxy, Ethoxy, Methyl oder Ethyl,

$R'_3$, $R'_4$, $R''_5$-$R''_{10}$ unabhängig voneinander für Wasserstoff, $C_1$-$C_4$-Alkyl oder β-Hydroxy-$C_2$-$C_4$-Alkyl,

$R'_{11}$ für Wasserstoff, Chlor, Methoxy oder Methyl,

$R'_{13}$ für Wasserstoff, Methoxy, Methyl,

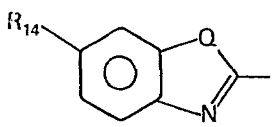

mit Q = O, S oder NH und $R_{14}$ = H oder $CH_3$,

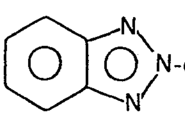 oder 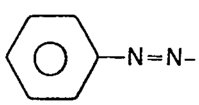 und

$A^{\ominus}$ für ein Anion stehen.

5. Verfahren zur Herstellung von kationischen Triazinfarbstoffen des Anspruchs 1, dadurch gekennzeichnet, dass man ein Mol eines Cyanurhalogenids in beliebiger Reihenfolge mit je einem Mol der Verbindung

$[HN(R_3)-Y-NR_5R_6R_7]^{\oplus}An^{\ominus}$

$[HN\ (R_4)-Z-NR_8R_9R_{10}]^{\oplus}An^{\ominus}$

und

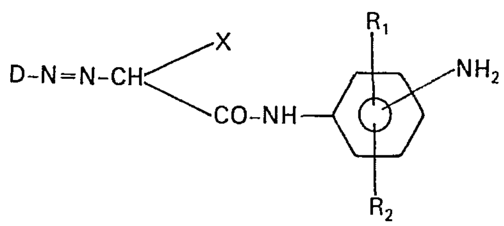

wobei

D, X, Y, Z, $R_1$-$R_{10}$ und $An^{\ominus}$ die in Anspruch 1 angegebene Bedeutung besitzen, umsetzt.

6. Verfahren zur Herstellung von kationaischen Triazinfarbstoffen des Anspruchs 1, dadurch gekennzeichnet, dass man ein Amin der Formel

$D-NH_2$

diazotiert und mit einer Kupplungskomponente der allgemeinen Formel

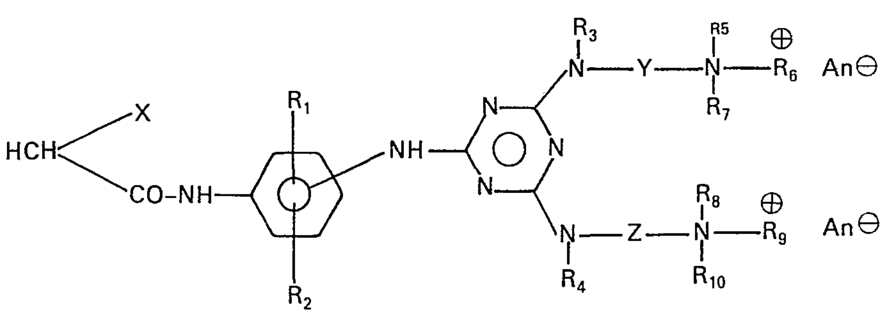

wobei
D, X, Y, Z, $R_1$–$R_{10}$ und $An^{\ominus}$ die in Anspruch 1 angegebene Bedeutung haben, kuppelt.

7. Verfahren zum Färben von natürlichen und synthetischen kationisch anfärbbaren Substraten und Massen, dadurch gekennzeichnet, dass man Farbstoffe des Anspruchs 1 verwendet.

8. Verfahren zum Färben von Papier in der Masse und in der Oberfläche, dadurch gekennzeichnet, dass man Farbstoffe des Anspruchs 1 verwendet.

**Revendications**

1. Colorants triaziniques cationiques de formule générale

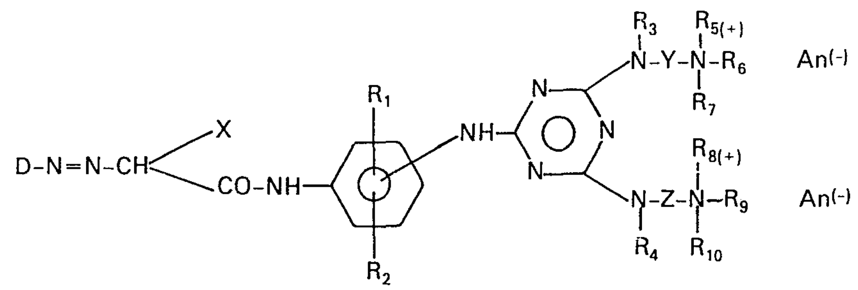

dans laquelle
D représente le reste d'un composant diazotable exempt de groupes anioniques,
X est un reste de formule $COCH_3$, CN, $COOCH_1$, $COOC_2H_5$, $CONH_2$, $COC_6H_5$, $CON(R_3)$-Y-$N(R_5R_6R_7)^{\oplus}An^{\ominus}$,
Y et Z représentent, indépendamment l'un de l'autre, un pont ou une liaison directe,
$R_1$ et $R_2$ représentent, indépendamment l'un de l'autre, l'hydrogène ou un substituant non ionique,
$R_3$ et $R_4$ représentent, indépendamment l'un de l'autre, l'hydrogène, un groupe alkyle en $C_1$–$C_4$ ou β- ou γ-hydroxyalkyle en $C_2$–$C_4$, et
$R_5$ à $R_{10}$ représentent, indépendamment les uns des autres, l'hydrogène, un groupe alkyle en $C_1$–$C_4$, β- ou γ-hydroxyalkyleen $C_2$–$C_4$, β- ou γ-ammoniumalkyle, phényle ou benzyle ou bien
$R_5$ et $R_6$ et/ou
$R_8$ et $R_9$ forment avec l'atome d'azote un hétérocycle à 5 ou 6 chaînons, ou bien
Y, $R_3$ et $R_5$ et/ou
Z, $R_4$ et $R_8$ forment ensemble et avec les atomes d'azote correspondants un cycle pipérazine, ou bien
$R_5$, $R_6$, $R_7$ et/ou
$R_8$, $R_9$, $R_{10}$ forment avec l'azote un reste de pyridine éventuellement substitué, et
$An^{\ominus}$ représente un anion.

2. Colorants triaziniques cationiques de formule de la revendication 1, dans laquelle
D représente un composant diazotable de la série benzénique, naphtalénique, du thiazole, du benzothiazole, du benzoisothiazole ou du thiadiazole,
Y et Z représentent des groupes alkylène en $C_2$–$C_5$, oxalkylène en $C_5$–$C_7$, phénylène ou benzylène et
$R_1$ et $R_2$ représentent l'hydrogène, des halogènes, des groupes alkyle en $C_1$–$C_4$ ou alcoxy en $C_1$–$C_4$.

Colorants triaziniques cationiques de formule générale

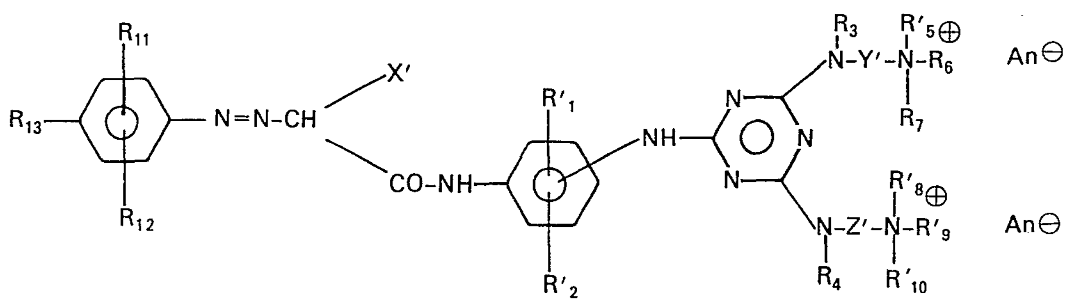

dans laquelle
$R_{11}$ et $R_{12}$ représentent, indépendamment l'un de l'autre, H, Cl, Br, $OCH_3$, $OC_2H_5$, $CH_3$ ou $C_2H_5$,
$R_{13}$ représente H, Cl, Br, $OCH_3$, $OC_2H_5$, $CH_3$, $C_2H_5$, $NHCOC_6H_5$, $CONHC_6H_5$,

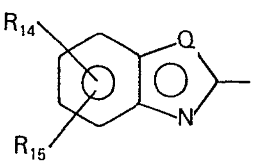 avec Q = O, S ou NH,

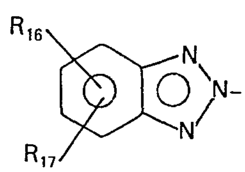 ou 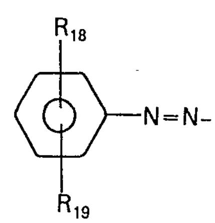

$R_{14}$ à $R_{19}$ représentent, indépendamment les uns des autres, H, Cl, Br, $OCH_3$, $OC_2H_5$, $CH_3$ ou $C_2H_5$,

X′ est un reste de formule $COCH_3$, CN, $COOCH_3$, $COOC_2H_5$, $CONH_2$, $COC_6H_5$ ou CON $(R'_3)$-$Y_1$-$N(R'_5,R'_6,R'_7)^{\oplus}An^{\ominus}$

Y′ et Z′ représentent, indépendamment l'un de l'autre, un groupe alkylène en $C_2$–$C_5$, oxaalkylène en $C_5$–$C_7$, phénylène, benzylène ou une liaison directe,

$R'_1$ et $R'_2$ représentent, indépendamment l'un de l'autre, l'hydrogène, le chlore, le brome, un groupe méthoxy, éthoxy, méthyle ou éthyle et

$R'_5$ à $R'_{10}$ représentent, indépendamment les uns des autres, l'hydrogène, des groupes alkyle en $C_1$–$C_4$, β- ou γ-hydroxyalkyle en $C_2$–$C_4$, β- ou γ-ammoniumalkyle en $C_2$–$C_4$ ou benzyle, ou

$R'_5$ et $R'_6$ et/ou

$R'_8$ et $R'_9$ forment avec l'azote un reste de pyrrolidine, de morpholine ou de pipéridine, ou bien

Y, $R_3$ et $R_5$ et/ou

Z, $R_4$ et $R_8$ forment ensemble et avec l'atome d'azote correspondant un cycle pipérazine, ou bien

$R'_5$, $R'_6$, $R'_7$ et/ou

$R'_8$, $R'_9$, $R'_{10}$ forment avec l'azote un reste de pyridine ou de picoline, et

$R_3$, $R_4$ et $An^{\ominus}$ ont les significations indiquées dans la revendication 1.

4. Colorants triaziniques cationiques de formule générale

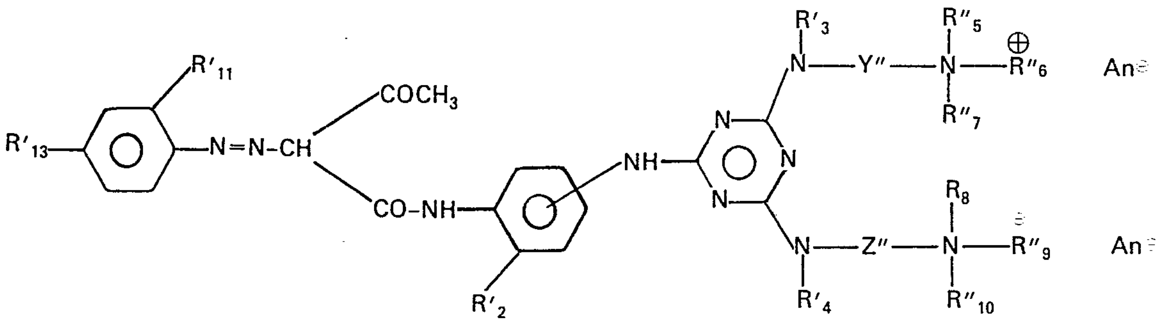

dans laquelle

Y″ et Z″ représentent, indépendamment l'un de l'autre, des groupes alkylène en $C_2$–$C_4$,

$R'_2$ représente l'hydrogène, le chlore, le brome, un groupe méthoxy, éthoxy, méthyle ou éthyle,

$R'_3$, $R'_4$, $R''_5$ à $R''_{10}$ représentent, indépendamment les uns des autres, l'hydrogène, des groupes alkyle en $C_1$–$C_4$ ou β-hydroxyalkyl en $C_2$–$C_4$,

$R'_{11}$ représente l'hydrogène, le chlore, un groupe méthoxy ou méthyle,

$R'_{13}$ représente l'hydrogène, un groupe méthoxy, méthyle,

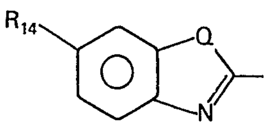 et avec Q = O, S ou NH

$R_{14}$ = H ou $CH_3$,

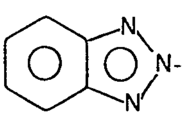 ou 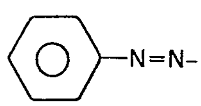 et

$A^{\ominus}$ représente un anion.

5. Procédé de préparation des colorants triaziniques cationiques de la revendication 1, caractérisé en ce que l'on fait réagir dans un ordre quelconque une mole d'un halogénure de cyanuryle avec une mole de chacun des composés

$[HN(R_3)\text{-}Y\text{-}N_5R_6R_7]^{\oplus}An^{\ominus}$

$[HN(R_4)\text{-}Z\text{-}NR_8R_9R_{10}]^{\oplus}An^{\ominus}$

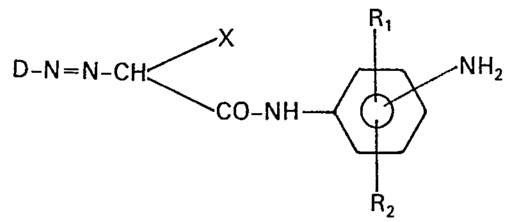

dans lesquels

D, X, Y, Z, $R_1$ à $R_{10}$ et $An^{\ominus}$ ont les significations indiquées dans la revendication 1.

6. Procédé de préparation des colorants triaziniques cationiques de la revendication 1, caractérisé en ce que l'on diazote une amine de formule

$-D-NH_2$

et on copule avec un copulant de formule générale

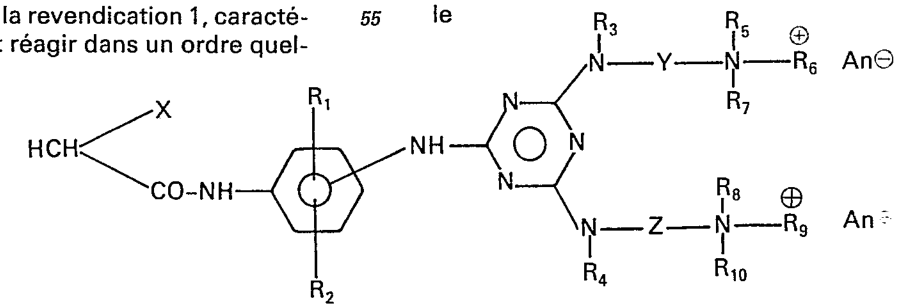

dans laquelle D, X, Y, Z, $R_1$ à $R_{10}$ et $An^{\ominus}$ ont les significations indiquées dans la revendication 1.

7. Procédé de teinture de substrats et de matières naturelles et synthétiques pouvant recevoir une teinture cationique, caractérisé en ce qu'on utilise des colorants suivant la revendication 1.

8. Procédé de teinture de papier dans la masse et en surface, caractérisé en ce qu'on utilise des colorants suivant la revendication 1.

**Claims**

1. Cationic triazine dyestuffs of the general formula

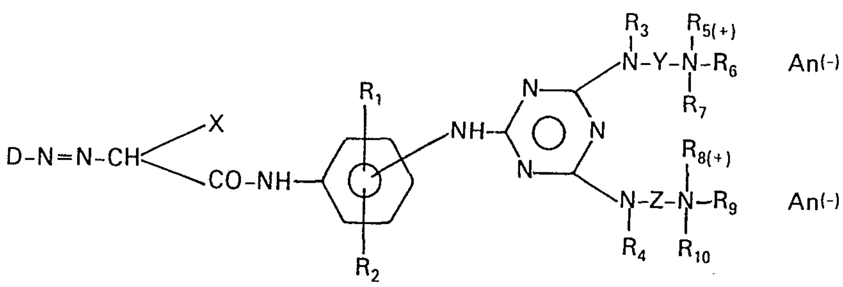

wherein

D is the radical of a diazo component which is free from anionic groups,

X is a radical of the formula $COCH_3$, CN, $COOCH_3$, $COOC_2H_5$, $CONH_2$, $COC_6H_5$ or $CON(R_3)$-Y-$N(R_5R_6R_7)^{\oplus}An^{\ominus}$,

Y and Z independently of one another are bridge members or direct bonds,

$R_1$ and $R_2$ independently of one another are hydrogen or non-ionic substituents,

$R_3$ and $R_4$ independently of one another are hydrogen, $C_1$-$C_4$-alkyl or β- or γ-hydroxy-$C_2$-$C_4$-alkyl and

$R_5$-$R_{10}$ independently of one another are hydrogen, $C_1$-$C_4$-alkyl, β- or γ-hydroxy-$C_2$-$C_4$-alkyl, β- or γ-ammoniumalkyl, phenyl or benzyl, or

$R_5$ and $R_6$, and/or $R_8$ and $R_9$, together with the nitrogen, form a five-membered or six-membered heterocyclic radical, or

Y, $R_3$ and $R_5$, and/or Z, $R_4$ and $R_8$, together with the particular nitrogen atoms, form a piperazine ring, or

$R_5$, $R_6$ and $R_7$ and/or $R_8$, $R_9$ and $R_{10}$, together with the nitrogen atom, form an optionally substituted pyridine radical, and

$An^{\ominus}$ is an anion.

2. Cationic triazine dyestuffs of the formula in Claim 1, wherein

D represents a diazo component of the benzene, naphthalene, thiazole, benzothiazole, benzisothiazole or thiadiazole series.

Y and Z represent $C_2$-$C_5$-alkylene, $C_5$-$C_7$-oxaalkylene, phenylene or benzylene and

$R_1$ and $R_2$ represent hydrogen, halogen, $C_1$-$C_4$-alkyl or $C_1$-$C_4$-alkoxy.

3. Cationic triazine dyestuffs of the general formula

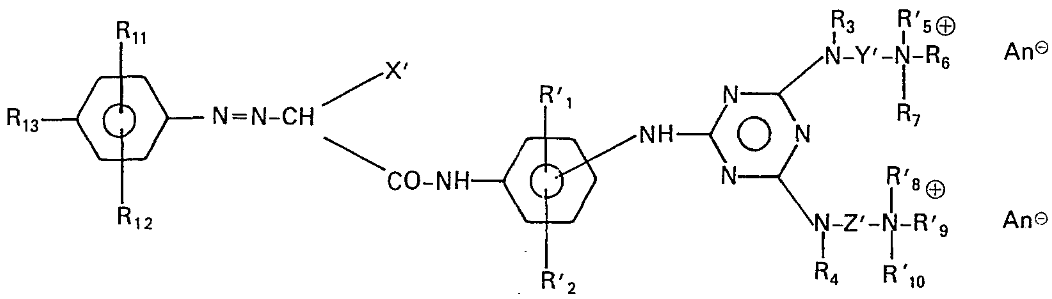

wherein

$R_{11}$ and $R_{12}$ independently of one another are H, Cl, Br, $OCH_3$, $OC_2H_5$, $CH_3$ or $C_2H_5$,

$R_{13}$ is H, Cl, Br, $OCH_3$, $OC_2H_5$, $CH_3$, $C_2H_5$, $NHCOC_6H_5$, $CONHC_6H_5$,

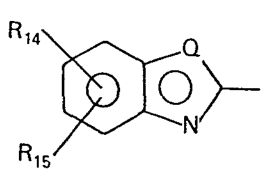

(where Q = O, S or NH)

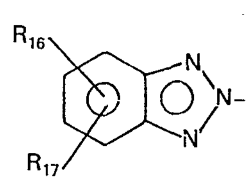

or

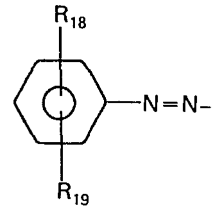

$R_{14}$-$R_{19}$ independently of one another are H, Cl, Br, $OCH_3$, $OC_2H_5$, $CH_3$ or $C_2H_5$,

X′ is a radical of the formula $COCH_3$, CN, $COOCH_3$, $COOC_2H_5$, $CONH_2$, $COC_6H_5$ or $(CON(R'_3)$-$Y_1$-$N(R'_5, R'_6, R'_7)^{\oplus}An^{\ominus}$,

Y′ and Z′ independently of one another are $C_2$-$C_5$-alkylene, $C_5$-$C_7$-oxaalkylene, phenylene, benzylene or a direct bond,

$R'_1$ and $R'_2$ independently of one another are hydrogen, chlorine, bromine, methoxy, ethoxy, methyl or ethyl and

$R'_5$-$R'_{10}$ independently of one another are hydrogen, $C_1$-$C_4$-alkyl, β- or γ-hydroxy-$C_2$-$C_4$-alkyl, β- or γ-ammonium-$C_2$-$C_4$-alkyl or benzyl, or

$R'_5$ and $R'_6$, and/or $R'_8$ and $R'_9$, with the nitrogen, form a pyrrolidine, morpholine or piperidine radical, or

Y, $R_3$ and $R_5$ and/or Z, and $R_4$ and $R_8$, together with the particular nitrogen atoms, form a piperazine ring, or

$R'_5$, $R'_6$ and $R'_7$, and/or $R'_8$, $R'_9$ and $R'_{10}$, with the nitrogen, form a pyridine or picoline radical, and

$R_3$, $R_4$ and An⊖ have the meaning given in Claim 1.

4. Cationic triazine dyestuffs of the general formula

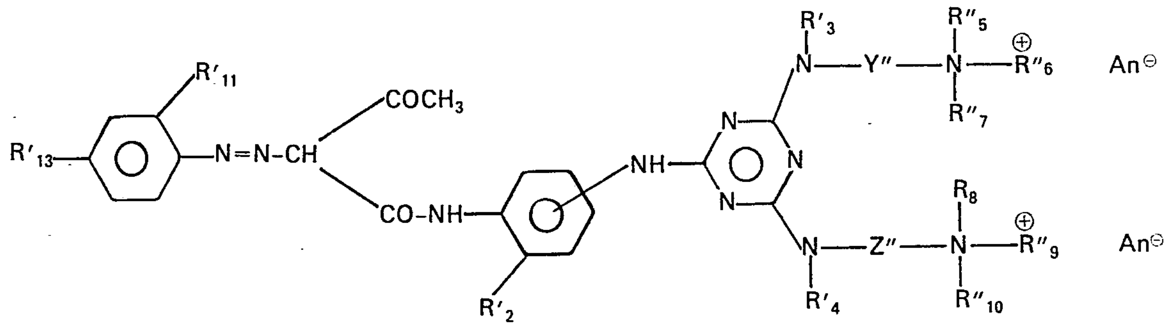

wherein

Y″ and Z″ independently of one another represent $C_2$-$C_4$-alkylene,

$R'_2$ represents hydrogen, chlorine, bromine, methoxy, ethoxy, methyl or ethyl,

$R'_3$, $R'_4$ and $R''_5$-$R''_{10}$ independently of one another represent hydrogen, $C_1$-$C_4$-alkyl or β-hydroxy-$C_2$-$C_4$-alkyl,

$R'_{11}$ represents hydrogen, chlorine, methoxy or methyl,

$R'_{13}$ represents hydrogen, methoxy, methyl,

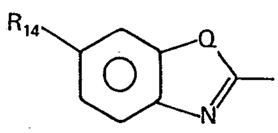

(where Q = O, S or NH and $R_{14}$ = H or $CH_3$),

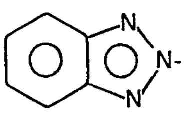

or

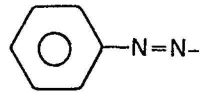

and

A⊖ represents an anion.

5. Process for the preparation of the cationic triazine dyestuffs of Claim 1, characterised in that one mol of a cyanuric halide and one mol each of the compounds

$[HN(R_3)\text{-}Y\text{-}NR_5R_6R_7]^{\oplus}An^{\ominus}$

$[HN(R_4)\text{-}Z\text{-}NR_8R_9R_{10}]^{\oplus}An^{\ominus}$

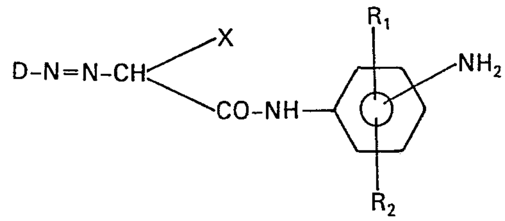

wherein

D, X, Y, Z, $R_1$-$R_{10}$ and An⊖ have the meaning given in Claim 1,

are reacted in any desired sequence.

6. Process for the preparation of the cationic triazine dyestuffs of Claim 1, characterised in that an amine of the formula

$D\text{-}NH_2$

wherein D has the meaning given in Claim 1, is diazotised and the diazotisation product is coupled with a coupling component of the general formula

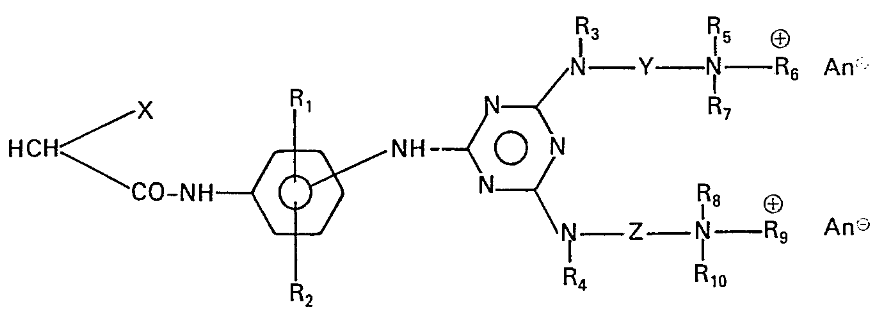

wherein X, Y, Z, $R_1$–$R_{10}$ and $An^{\ominus}$ have the meaning given in Claim 1.

7. Process for dyeing naturally occurring and synthetic substrates and compositions which can be dyed with cationic dyestuffs, characterised in that dyestuffs of Claim 1 are used.

8. Process for beater-dyeing and surface-dyeing paper, characterised in that dyestuffs of Claim 1 are used.